# EUROPEAN PATENT SPECIFICATION

(11) **EP 4 006 778 B1**
(45) Date of publication and mention of the grant of the patent: **28.01.2026**
(21) Application number: 21210974.8
(22) Date of filing: 29.11.2021
(51) Int. Cl.: G06V 10/764, G06V 10/82, G06Q 10/10, G06Q 10/20, G06V 20/10

(54) **SYSTEM FOR ANALYSING, MONITORING AND DIAGNOSING, IN AUTOMATED, CURRENT AND PREDICTIVE WAY, THE CONDITION OF BUILDINGS AND/OR ARCHITECTURAL STRUCTURES AND OPERATION METHOD THEREOF**
SYSTEM ZUR AUTOMATISIERTEN, LAUFENDEN UND VORAUSSCHAUENDEN ANALYSE, ÜBERWACHUNG UND DIAGNOSE DES ZUSTANDS VON GEBÄUDEN UND/ODER ARCHITEKTONISCHEN STRUKTUREN UND VERFAHREN ZU DESSEN BETRIEB
SYSTÈME D'ANALYSE, DE SURVEILLANCE ET DE DIAGNOSTIC, DE MANIÈRE AUTOMATISÉE, COURANTE ET PRÉDICTIVE, DE L'ÉTAT DES BÂTIMENTS ET/OU DES STRUCTURES ARCHITECTURALES ET PROCÉDÉ DE FONCTIONNEMENT DE CELUI-CI

(30) Priority: 30.11.2020 IT 202000028919
(43) Date of publication of application: 01.06.2022
(73) Proprietor: MARE ENGINEERING GROUP S.P.A. IN BREVE MARE GROUP S.P.A., 80038 Pomigliano D'Arco (NA) (IT)
(72) Inventor: NAPPI, Roberto, 80059 Torre del Greco (NA) (IT)
(74) Representative: Tiburzi, Andrea

(56) References cited:
- WO-A1-2020/088739

## Description

The present invention relates to a system for the analysis, monitoring and diagnosing, in a current and predictive way, the condition of building and/or architectural structures, in particular of civil infrastructures, building constructions, civil use buildings, or of structures belonging to the architectural, historical, religious and cultural heritage, or to archaeological sites.

The present invention also relates to the method of operation of the system.

More in detail, the invention concerns a system of the above type, studied and implemented, in particular, to detect the state of conservation of a building or architectural structure, such as roofs or tiles of historic buildings, analyze it and monitor its evolution over time, in order to implement predictive maintenance or restoration works, but which can be used for any building or monument or work, for which an assessment of its conservation state is necessary.

In the following the description will be addressed to building or architectural structures, but it is clear that it should not be considered limited to this specific use, since it can then also be applied to infrastructure works.

As is well known, the Code of Cultural Heritage and Landscape currently defines prevention as "*the set of activities suitable for limiting risk situations connected to the cultural heritage in its context*" and maintenance as "*the set of activities and interventions intended to control the conditions of the cultural property and to maintain the integrity, functional efficiency and identity of the property and its parts*"*.*

Preventive activities are mainly indirect activities, i.e. that do not directly involve the product and include both management activities, such as regulations for use, and activities aimed at controlling or containing risky situations, which the product is subject to, due to the external environment, such as cutting the surrounding vegetation and the like.

Preventive activities include those aimed at the asset with preventive effectiveness, i.e. activities which, while directly involving the product, can be associated with preventive activities precisely because of their considerable effectiveness in the control and contrast of degrading actions such as cleaning of the gutter channels, the dusting of decorative devices and the like.

The more properly maintenance activities are those that directly involve the matter of the product and are considered necessary in order to slow down or contain the progression of damage phenomena. They are designed and executed with the aim of repairing damage situations, where possible by removing the causes, after having previously intercepted them.

Currently, the activities of prevention and scheduled maintenance are still largely ignored and disregarded, this involves the possible partial or total damage of an asset or a structure of interest.

Therefore, care activities need to be planned and carried out continuously. Of particular importance are the Inspection Activities or controls and the Small Maintenance Activities, direct and indirect, which aim to keep degradation phenomena under control, through operational tools consisting of procedures, operating instructions, and forms registration.

Currently, this process is not automated and requires a human commitment to schedule periodic inspections on an asset of interest.

The disadvantages of current techniques concern the risk for an operator who, for example, has to inspect unsafe structures.

A further disadvantage is the time required to inspect the structures.

The relevant prior art includes also the patent application WO 2020/088739 A1.

In light of the above, it is, therefore, the scope of the present invention to provide a system for the automatic recognition of the damage or anomaly, which has superficial type evidence and such as to integrate the functions necessary for the management and removal process of the detected anomalies.

A further object of the present invention is to analyze the data history in order to determine the progress of the degradation and to predict the occurrence of damage or anomalies.

A further object of the present invention is to provide a system for the integrated and optimized management of maintenance and for the management of the history of the interventions for the generation of an archive of degraded assets, in relation to the anomalies identified.

A further object of the present invention is to provide the tools necessary for carrying out the method and the apparatuses that carry out this method.

It is, therefore, specific object of the present invention a system for analyzing and monitoring, and diagnosing the condition of buildings and/or architectural structures based on image and sensor analysis, comprising a logic control unit, provided with communication means for receiving and sending data, at least a plurality of sensors, which can be placed in predetermined positions inside and/or outside said structures or in proximity to them, capable of detecting images and information of said structures and sending them to said logic control unit, said logic control unit being capable to process said images and data in order to extract a plurality of features corresponding to the state of conservation of said structures and to send alarm signals in case said plurality of features correspond to a state of decay of said structures.

Further according to the invention, said plurality of sensors may comprise fixed and/or mobile sensors.

Preferably according to the invention, said fixed sensors are cameras and/or thermo-cameras and/or laser scanners and/or radar provided with other kind of sensors, and said mobile sensors are remote devices for images acquisition, capable to be used by an operator, such as smartphones and/or tablets, or cameras/thermo-cameras/ laser scanners/radar capable of images acquisition arranged on board of mobile carriers such as drones and the like.

Still according to the invention, said logic control unit comprises a memory unit, capable of storing the images sent by said plurality of sensors, so as to generate a data set of images, an image processing program, capable to apply filters to said image and to format said image, a first neural network, trained to extract features from said image, and a second neural network, trained to receive in input said features and to output a predictions vector of to classify the condition of said structure.

Always according to the invention, said predictions vector provides a classification in two classes: a first class of structures in an asset state of conservation and a second class of structures in a bad state of conservation.

Further according to the invention, said system comprises a data collection and activity planning device capable of activating the maintenance of the structure if an alarm signal has been generated.

Preferably according to the invention, said plurality of sensors send said images to said logic control unit, via cable or wireless.

It is further object of the present invention an operation method of a system for analyzing and monitoring the condition of buildings and/or architectural structures, comprising the following steps:
a. providing a logic control unit;
b. acquiring images of structures and sending them to said logic control unit;
c. storing said images in a data set of images;
d. filtering and formatting said images;
e. extracting a plurality of features from said images corresponding to the state of conservation of said structures;
f. starting from said plurality of features extracted in said step e., providing as output a predictions vector for classifying the state of said structure;
g. if the structure is in a decay state or if the prevision of decay falls below a settable time threshold, sending alarm signals to activate the corresponding maintenance and managing the maintenance process until the alarm is resolved/removed.

The present invention will be now described, for illustrative but not limitative purposes, according to its preferred embodiments, with particular reference to the figures of the enclosed drawings, wherein:
figure 1 shows a block diagram of the system for analysis, monitoring and diagnosing, in automated, current and predictive way, of the state of building and/or architectural structures, object of the present invention;
figure 2 shows a schematic representation of a component of the system shown in figure 1;
figure 3 shows a block diagram of the operating method of the system.

In the various figures, similar parts will be indicated with the same numerical references.

The invention generically concerns the recognition of images through neural networks, in order to simulate human cognitive behavior towards sight, which makes the processes of image recognition and image detection very similar to human ones, through the use of algorithms and innovative elaboration processes based on machine & deep learning.

Through an algorithm for reading and interpreting images and thanks to the use of neural networks, it is possible to recognize shapes, appearance, and color, and therefore to evaluate on the basis of these data the state of deterioration of an asset, then evaluating whether it still meets the accepted quality standard and possibly intervene on the asset.

The considered image recognition is applied in contexts of maintenance, restoration, or structural safety of an asset.

Using the convolutional neural networks, hereafter referred to as CNN, it is possible to carry out a direct classification of the acquired image sets.

Features are extracted from each image acquired by means of sensors and supplied as input to the system.

Once the images, even relative to different angles, are converted into features, an answer can be obtained from a previously trained model with a set of both similar and different images of the same context.

By analyzing the history of the images, it is possible to define the deterioration trend and predict the occurrence of damage or anomalies.

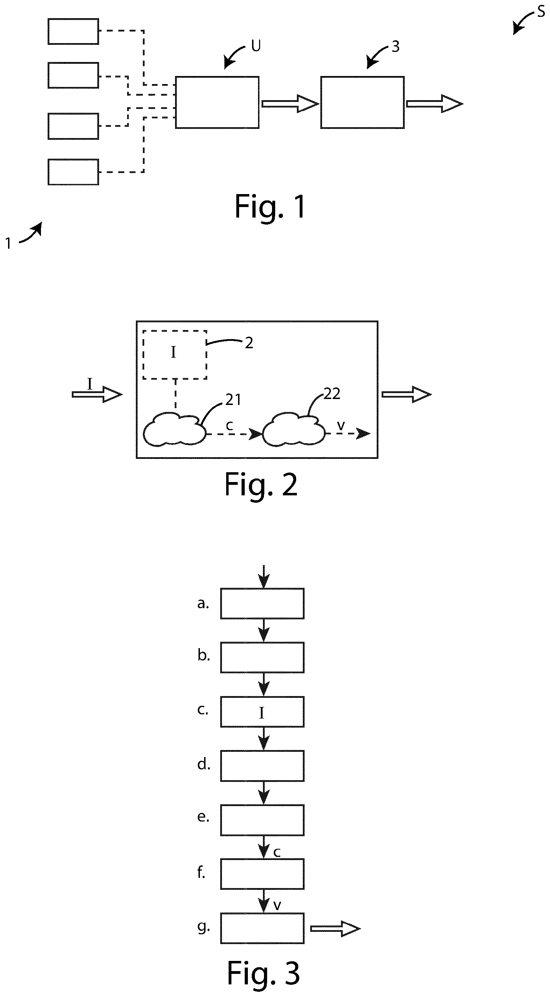

With reference to figure 1, the system S for the analysis, monitoring, and automated diagnostics, current and predictive, of the state of the building and/or architectural structures object of the present invention, essentially comprises a plurality of sensors 1, capable of detecting images, a logic control unit U, and a device 3, for collecting data, for planning maintenance activities and supporting the maintenance intervention.

Said plurality of sensors 1 substantially comprises fixed sensors and movable sensors.

Fixed sensors are, for example, cameras and/or thermal cameras, laser scanners, and radars, and are installed at preset points inside and/or outside structures for image acquisition.

Mobile sensors are, for example, remote devices, capable of acquiring images, for use by a specialized operator, such as *smartphones* and/or *tablets,* used to carry out surveys of specific parts of structures, or such as video/thermal cameras, *laser scanners*, *radar*, also supported by drones and/or by other handling vectors.

Said plurality of sensors is able to detect the images of the structures and send these images, and the status information detected by the sensors used, to said logic control unit U by means of a cable connection or in no cableway or *wireless.*

Said sensors can be accelerometers, inclinometers, strain gauges, environmental, inertial, telemetric, ultrasound, electromagnetic, and the like, and can be used to support the determination of the state of the structure under observation.

With reference to figure 2, said logic control unit U comprises a memory unit 2, an image processing program and a first neural network 21, and a second neural network 22.

Said memory unit 2 stores in memory the images sent by said plurality of sensors 1, so as to generate a *data set* of the images I.

Said image processing program is able to apply filters on the image to improve its quality and is able to format the image so that it is easily processed by said neural network.

Said first neural network 21 is developed starting from the "base" neural network known as perceptor or *perceptron,* with a single layer with an input and an output level.

Multiple perceptrons can be linked together to form a multilayered neural network with one input, one output, and multiple inner layers, also known as hidden layers.

The more layers are hidden, the deeper the neural network.

Deep neural networks are made up of a deep stack of hidden layers, each one with a certain number of neurons.

The Convolutional neural networks - convolutional neural networks - CNNs are deep neural networks capable of performing image analysis.

Said first neural network 21 is a *CNN* trained on said *data set* of images I, to extract features C from the images it has learned during the final training phase.

The learning technique used is the propagation of the error through the known optimization algorithm of the Gradient Descendent type, capable of learning the weights of multilayer networks.

Said second neural network 22 comprises neurons in one layer, which are connected to all the neurons of the following layers.

Said second neural network 22 receives at its input said features C provided by said first neural network and provides at its output a predictions vector V.

In particular, said predictions vector V is a probability vector.

These probabilities can belong to two classes: a first class of asset in a good state of conservation, and a second class of asset in a bad state of conservation.

Each analyzed image is then tagged with a value belonging to the first class or the second class.

If an image I has been tagged with a value of the first class, the control logic unit U also provides a time estimate within which a damage or an anomaly will form.

If this estimate falls below a threshold that can be configured, said logic control unit U sends a corresponding alarm signal and the integrated maintenance process is started automatically.

If an image I has been labeled with a value of the second class, said logic control unit U sends a corresponding alarm signal, said image I is then verified/validated if the assigned value is correct, maintenance is started, if the assigned value is incorrect, the image is supplied again to the system S.

Said data collection and activity planning device 3 includes a program that stores and displays the history of the data processed by said logical control unit U, generates and renders available for the consultation periodic reports on the state of the analyzed structure.

Said device 3 receives image I as input and automatically plans and prepares the maintenance to be carried out, assigning the necessary priorities and resources.

In particular, said data collection and activity planning device 3 associates said image I with the technical and personal information relating to the examined item.

Subsequently, it associates the equipment and spare parts necessary for the execution of the maintenance intervention to the asset or activates the automated purchase procedure if necessary.

Subsequently, the maintenance intervention is automatically established, and the authorized/certified maintenance personnel are automatically assigned to carry out the maintenance intervention.

Subsequently, said device allows providing support to maintenance activities through augmented, virtual, and mixed reality tools.

Finally, downstream of the maintenance/restoration, said software device archives and stores the history of the interventions, in order to generate an archive of degraded assets.

The operation of the system S described above is as follows.

When it is intended to automatically monitor and diagnose the conservation state of a building and/or architectural structure, the images of a structure are acquired by means of said plurality of sensors 1.

Said plurality of sensors 1 sends said acquired images to said logic control unit U via a cable connection or wirelessly.

Said images are stored in said memory unit 2, so as to create a *data set* of images I, which are processed by said image processing program.

In particular, these images are filtered and formatted.

Subsequently, said images I are sent to said first neural network 21 which is trained to derive a plurality of features C from said images I.

Said features C are sent to said second neural network 22, which processes said features C and outputs a predictions vector V, which allows to classify the structure as "in good state of conservation" or "in poor state of conservation".

If the structure is in a good state of conservation and the estimated remaining time for the formation of damage or anomaly falls below a threshold that can be configured, an alarm signal is generated that activates the maintenance process, and maintenance is carried out, as is previously described, also with the support of *augmented*, *virtual* and *mixed reality* tools.

If the structure is in a bad state of conservation, an alarm signal is generated that activates the maintenance process and maintenance is carried out, as described above, also with the support of *augmented*, *virtual* and *mixed reality* tools.

Through this system S, the maintenance technician has access to the agenda with the details of the maintenance interventions to be carried out on a given day, or those already scheduled for the following days.

The operator has the right to interactively/dynamically access the model of the structure subject to monitoring and diagnostics produced by the system S, for example, also using the BIM - Building Information Modeling technology, to consult information such as, for example, drawings/floor, plans/projects, techniques construction, plant position, materials used, documents/images/videos of surveys carried out in the past.

The interconnection with the automated anomaly detection unit helps the maintenance technician to recognize the anomaly in the field.

The operator can consult the maintenance/restoration operating procedures, any video clip of maintenance interventions carried out previously, the safety procedures.

The operator has the right to request remote support in video-chat/streaming from one or more supervisors by sharing, through high-resolution images, the scenario observed in real-time.

As is evident from the above description, the system for the analysis, monitoring and automated diagnostics of the state of the building and/or architectural structures, object of the present invention, has the advantage of performing the automated recognition of maintenance or restoration interventions, to be made on a structure, it allows the integrated management of the interventions, the intervention support with augmented, virtual and mixed reality tools and the creation of an archive of the degraded assets.

## Claims

1. System (S) for analyzing and monitoring and diagnosing the condition of buildings and/or architectural structures based on image and sensor analysis, comprising
a logic control unit (U), provided with communication means for receiving and sending data,
at least a plurality of sensors (1), which can be placed in predetermined positions inside and/or outside said structures or in proximity to them, capable of detecting images and information of said structures and sending them to said logic control unit (U),
said system (S) being **characterized**
**in that** said logic control unit (U) is capable to process said images and data in order to extract a plurality of features (C) corresponding to the state of conservation of said structures, and to send alarm signals in case said plurality of features (C) correspond to a state of decay of said structures,
**in that** said logic control unit (U) comprises
a memory unit (2), capable of storing the images sent by said plurality of sensors (1), so as to generate a data set of images (I),
an image processing program, capable to apply filters to said image (I) and to format said image (I),
a first neural network (21), trained to extract features (C) from said image (I), and
a second neural network (22), trained to receive in input said features (C) and to output a predictions vector (V) to classify the condition of said structure, said predictions vector (V) providing a classification in two classes: a first class of structures in a good state of conservation and a second class of structures in a bad state of conservation, and
**in that** said logic control unit (U) is capable to analyze and tag each image (I) with a value belonging to the first class or the second class, if an image (I) has been tagged with a value of the first class, said control logic unit (U) is capable to provide a time estimate within which a damage or an anomaly will form.

2. System (S) according to the preceding claim, **characterized in that** said plurality of sensors (1) comprises fixed and/or mobile sensors.

3. System (S) according to the preceding claim, **characterized in that** said fixed sensors are cameras and/or thermo-cameras and/or laser scanners and/or radar provided with other kind of sensors, and said mobile sensors are remote devices for images acquisition, capable to be used by an operator, such as smartphones and/or tablets, or cameras/thermo-cameras/ laser scanners/radar capable of images acquisition arranged on board of mobile carriers such as drones and the like.

4. System (S) according to any one of the preceding claims, **characterized in that** it comprises a data collection and activity planning device (3) capable of activating the maintenance of the structure if an alarm signal has been generated.

5. System (S) according to any one of the preceding claims, **characterized in that** said plurality of sensors (1) send said images to said logic control unit (U), via cable or wireless.

6. Operation method of a system (S) for analyzing and monitoring the condition of buildings and/or architectural structures according to any one of claims 1-5, comprising the following steps:
a. providing a logic control unit (U);
b. acquiring images of structures and sending them to said logic control unit (U);
c. storing said images in a data set of images (I);
d. filtering and formatting said images (I);
e. extracting a plurality of features (C) from said images (I) corresponding to the state of conservation of said structures;
f. starting from said plurality of features (C) extracted in said step e., providing as output a predictions vector (V) for classifying the state of said structure, a first class of structures in a good state of conservation and a second class of structures in a bad state of conservation;
g. if the structure is in a decay state or if the prevision of decay falls below a settable time threshold, sending alarm signals to activate the corresponding maintenance and managing the maintenance process until the alarm is resolved/removed.

## Patentansprüche

1. System (S) zur Analyse und Überwachung und Diagnose des Zustands von Gebäuden und/oder architektonischen Strukturen auf der Grundlage von Bild- und Sensoranalyse, umfassend
eine logische Steuereinheit (U), die mit Kommunikationsmitteln zum Empfangen und Senden von Daten ausgestattet ist,
mindestens eine Vielzahl von Sensoren (1), die an vorbestimmten Positionen innerhalb und/oder außerhalb der Strukturen oder in deren Nähe angeordnet werden können und in der Lage sind, Bilder und Informationen der Strukturen zu erfassen und sie an die logische Steuereinheit (U) zu senden,
wobei das System (S) **dadurch gekennzeichnet ist dass** die logische Steuereinheit (U) in der Lage ist, die Bilder und Daten zu verarbeiten, um eine Vielzahl von Merkmalen (C) zu extrahieren, die dem Erhaltungszustand der Strukturen entsprechen, und Alarmsignale zu senden, falls die Vielzahl von Merkmalen (C) einem Zustand des Verfalls der Strukturen entspricht,
dadurch, dass die logische Steuereinheit (U) Folgendes umfasst
eine Speichereinheit (2), die in der Lage ist, die von der Vielzahl von Sensoren (1) gesendeten Bilder zu speichern, um einen Datensatz von Bildern (I) zu erzeugen,
ein Bildverarbeitungsprogramm, das in der Lage ist, Filter auf das genannte Bild (I) anzuwenden und das genannte Bild (I) zu formatieren,
ein erstes neuronales Netz (21), das trainiert wurde, um Merkmale (C) aus dem Bild (I) zu extrahieren, und ein zweites neuronales Netz (22), das so trainiert ist, dass es als Eingabe die Merkmale (C) erhält und einen Vorhersagevektor (V) ausgibt, um den Zustand der Struktur zu klassifizieren, wobei der Vorhersagevektor (V) eine Klassifizierung in zwei Klassen liefert: eine erste Klasse von Strukturen in einem guten Erhaltungszustand und eine zweite Klasse von Strukturen in einem schlechten Erhaltungszustand, und
dass die logische Steuereinheit (U) in der Lage ist, jedes Bild (I) zu analysieren und mit einem Wert zu kennzeichnen, der zu der ersten Klasse oder der zweiten Klasse gehört, wenn ein Bild (I) mit einem Wert der ersten Klasse gekennzeichnet wurde, die logische Steuereinheit (U) in der Lage ist, eine Zeitschätzung zu liefern, innerhalb der sich ein Schaden oder eine Anomalie bilden wird.

2. System (S) gemäß dem vorstehenden Anspruch, **dadurch gekennzeichnet, dass** die Vielzahl von Sensoren (1) feste und/oder mobile Sensoren umfasst.

3. System (S) nach dem vorhergehenden Anspruch, **dadurch gekennzeichnet, dass** die festen Sensoren Kameras und/oder Thermokameras und/oder Laserscanner und/oder Radar sind, die mit anderen Arten von Sensoren versehen sind, und dass die mobilen Sensoren ferngesteuerte Geräte zur Bilderfassung sind, die von einem Bediener verwendet werden können, wie Smartphones und/oder Tablets, oder Kameras/Thermokameras/Laserscanner/Radar, die zur Bilderfassung fähig sind und an Bord von mobilen Trägern wie Drohnen und dergleichen angeordnet sind.

4. System (S) nach einem der vorhergehenden Ansprüche, **dadurch gekennzeichnet, dass** es eine Datenerfassungs- und Aktivitätsplanungsvorrichtung (3) umfasst, die in der Lage ist, die Instandhaltung des Bauwerks zu aktivieren, wenn ein Alarmsignal erzeugt worden ist.

5. System (S) nach einem der vorhergehenden Ansprüche, **dadurch gekennzeichnet, dass** die Vielzahl von Sensoren (1) die Bilder über Kabel oder drahtlos an die logische Steuereinheit (U) senden.

6. Betriebsverfahren eines Systems (S) zur Analyse und Überwachung des Zustands von Gebäuden und/oder architektonischen Strukturen nach einem der Ansprüche 1-5, umfassend die folgenden Schritte:
a. Bereitstellung einer logischen Steuereinheit (U);
b. Erfassen von Bildern von Strukturen und Senden dieser Bilder an die logische Steuereinheit (U);
c. Speichern der Bilder in einem Datensatz von Bildern (I);
d. Filterung und Formatierung der Bilder (I);
e. Extrahieren einer Vielzahl von Merkmalen (C) aus den Bildern (I), die dem Erhaltungszustand der Strukturen entsprechen;
f. ausgehend von der Vielzahl der in Schritt e. extrahierten Merkmale (C),
Ausgabe eines Vorhersagevektors (V) zur Klassifizierung des Zustands der Struktur, einer ersten Klasse von Strukturen in einem guten Erhaltungszustand und einer zweiten Klasse von Strukturen in einem schlechten Erhaltungszustand;
g. wenn sich die Struktur in einem Verfallszustand befindet oder wenn die Vorhersage des Verfalls unter einen einstellbaren Zeitschwellenwert fällt, Senden von Alarmsignalen, um die entsprechende Wartung zu aktivieren, und Verwalten des Wartungsprozesses, bis der Alarm behoben/beseitigt ist.

## Revendications

1. Système (S) d'analyse, de surveillance et de diagnostic de l'état des bâtiments et/ou des structures architecturales basé sur l'analyse d'images et de capteurs, comprenant
une unité de commande logique (U), dotée de moyens de communication pour la réception et l'envoi de données, au moins une pluralité de capteurs (1), qui peuvent être placés dans des positions prédéterminées à l'intérieur et/ou à l'extérieur desdites structures ou à proximité de celles-ci, capables de détecter des images et des informations sur lesdites structures et de les envoyer à l'unité de commande logique (U), ledit système (S) étant caractérisé
l'unité de commande logique (U) est capable de traiter ces images et ces données afin d'extraire une pluralité de caractéristiques (C) correspondant à l'état de conservation desdites structures, et d'envoyer des signaux d'alarme au cas où cette pluralité de caractéristiques (C) correspondrait à un état de délabrement desdites structures,
en ce que ladite unité de commande logique (U) comprend une unité de mémoire (2), capable de stocker les images envoyées par ladite pluralité de capteurs (1), de manière à générer un ensemble de données d'images (I), un programme de traitement d'images, capable d'appliquer des filtres à ladite image (I) et de formater ladite image (I),
un premier réseau neuronal (21), entraîné à extraire des caractéristiques (C) de ladite image (I), et
un deuxième réseau neuronal (22), entraîné à recevoir en entrée lesdites caractéristiques (C) et à émettre un vecteur de prédictions (V) pour classer l'état de ladite structure, ledit vecteur de prédictions (V) fournissant une classification en deux classes: une première classe de structures en bon état de conservation et une seconde classe de structures en mauvais état de conservation, et
en ce sens que ladite unité logique de contrôle (U) est capable d'analyser et de marquer chaque image (I) avec une valeur appartenant à la première classe ou à la deuxième classe, si une image (I) a été marquée avec une valeur de la première classe, ladite unité logique de contrôle (U) est capable de fournir une estimation du temps dans lequel un dommage ou une anomalie se produira.

2. Système (S) selon la revendication précédente, **caractérisé par le fait que** ladite pluralité de capteurs (1) comprend des capteurs fixes et/ou mobiles.

3. Système (S) selon la revendication précédente, **caractérisé par le fait que** lesdits capteurs fixes sont des caméras et/ou des caméras thermiques et/ou des scanners laser et/ou des radars équipés d'autres types de capteurs, et que lesdits capteurs mobiles sont des dispositifs à distance pour l'acquisition d'images, pouvant être utilisés par un opérateur, tels que des smartphones et/ou des tablettes, ou des caméras/thermocaméras/scanners laser/radars capables d'acquérir des images disposées à bord de transporteurs mobiles tels que des drones et similaires.

4. Système (S) selon l'une quelconque des revendications précédentes, **caractérisé en ce qu'**il comprend un dispositif de collecte de données et de planification des activités (3) capable d'activer l'entretien de la structure si un signal d'alarme a été généré.

5. Système (S) selon l'une quelconque des revendications précédentes, **caractérisé en ce que** ladite pluralité de capteurs (1) envoie lesdites images à ladite unité de commande logique (U), par câble ou sans fil.

6. Procédé d'exploitation d'un système (S) d'analyse et de surveillance de l'état des bâtiments et/ou des structures architecturales selon l'une quelconque des revendications 1-5, comprenant les étapes suivantes:
a. fournir une unité de commande logique (U);
b. acquérir des images de structures et les envoyer à ladite unité de commande logique (U);
c. stocker ces images dans un ensemble de données d'images (I);
d. le filtrage et le formatage desdites images (I);
e. extraire de ces images (I) une pluralité de caractéristiques (C) correspondant à l'état de conservation de ces structures;
f. à partir de ladite pluralité de caractéristiques (C) extraites à ladite étape e., fournir en sortie un vecteur de prédictions (V) pour classer l'état de ladite structure, une première classe de structures en bon état de conservation et une seconde classe de structures en mauvais état de conservation;
g. si la structure est en état de dégradation ou si la prévision de dégradation tombe en dessous d'un seuil de temps réglable, envoyer des signaux d'alarme pour activer la maintenance correspondante et gérer le processus de maintenance jusqu'à ce que l'alarme soit résolue/supprimée.
